(19) Europäisches Patentamt
European Patent Office
Office européen des brevets

(11) **EP 3 300 257 A1**

(12) **EUROPEAN PATENT APPLICATION**

(43) Date of publication:
**28.03.2018  Bulletin 2018/13**

(51) Int Cl.:
***H04B 1/04*** *(2006.01)*

(21) Application number: **16189910.9**

(22) Date of filing: **21.09.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Intel IP Corporation
Santa Clara, CA 95054 (US)**

(72) Inventors:
• **Avraham, Oren
  4632539 Herzlia (IL)**
• **Sulimarski, Avi
  73134 Kfar Oranim (IL)**

(74) Representative: **2SPL Patentanwälte PartG mbB
Postfach 15 17 23
80050 München (DE)**

(54) **METHOD AND CIRCUIT FOR DETERMINING A SETTING OF AN IMPEDANCE MATCHING CIRCUIT**

(57) A method for impedance matching includes generating a predistorted signal using a predistortion model and a transmit signal. The method further includes calculating a quality criterion for a transmitted predistorted signal based on a transmit signal and a feedback signal. The method further includes determining the setting of the impedance matching circuit based on the quality criterion.

FIG. 3

## Description

### Field

Examples relate to a method and a circuit for determining a setting of an impedance matching circuit, a transmitter for a wireless signal and a mobile telecommunications device. Examples relate to transmission of signals and, in particular, to methods and circuits for determining a setting of an impedance matching circuit coupled to an output of a power amplifier.

### Background

Today's and future communication systems are challenged by the ever-increasing demand for higher data rates. High data rates may dictate very stringent transmit (TX) and receive (RX) key performance indicators (KPI). One example of a KPI is a transmitter's error vector magnitude (EVM) and the compliance with a spectral mask at high transmit powers. There is a demand for the capability of generating transmitted signals compliant with high signal quality requirements (KPIs).

### Brief description of the Figures

Some embodiments of apparatuses and/or methods will be described in the following by way of example only, and with reference to the accompanying figures, in which

Fig. 1 illustrates an example of a circuit for determining a setting of an impedance matching circuit;

Fig. 2 illustrates a flowchart of an example of a method for impedance matching circuit;

Fig. 3 illustrates an example of a transmitter for a wireless signal;

Fig. 4 illustrates an example for components of a transmitter capable of generating a pre-distortion model;

Fig. 5 illustrates a block diagram of components used to generate a pre-distortion model;

Fig. 6 illustrates an example of a signal impairment due to load mismatch of a radiator within a wireless communication system according to the examples described herein in comparison to a conventional implementation; and

Fig. 7 schematically illustrates an example of a mobile telecommunications device.

### Detailed Description

Various examples will now be described more fully with reference to the accompanying drawings in which some examples are illustrated. In the figures, the thicknesses of lines, layers and/or regions may be exaggerated for clarity.
Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Like numbers refer to like or similar elements throughout the description of the figures, which may be implemented identically or in modified form when compared to one another while providing for the same or a similar functionality.
It will be understood that when an element is referred to as being "connected" or "coupled" to another element, the elements may be directly connected or coupled or via one or more intervening elements.
The terminology used herein is for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.
Unless otherwise defined, all terms (including technical and scientific terms) are used herein in their ordinary meaning of the art to which the examples belong, unless expressly defined otherwise herein.

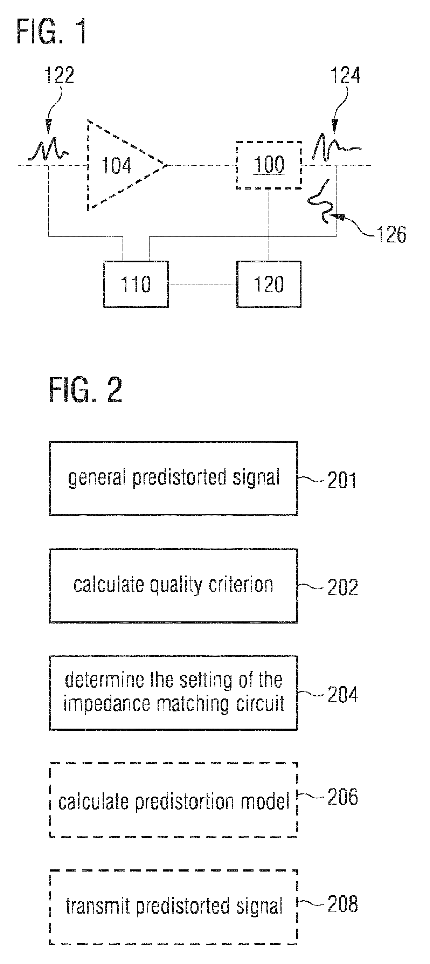

Fig. 1 illustrates an example of a circuit for determining a setting of an impedance matching circuit 102. The impedance matching circuit 102 is coupled to an output of a power amplifier 104. The impedance matching circuit 102 and the power amplifier 104 are illustrated for pedagogical reasons only and for the better understanding of the example of the circuit for determining the setting of the impedance matching circuit 102. In wireless telecommunication transmit chains, an impedance matching circuit 102 may be coupled to an output of a power amplifier 104 in order to match the impedance of an antenna radiator, which is not shown in Fig. 1, to the output of the power amplifier 104 illustrated in Fig. 1. Impedance of the radiator may, for example, dynamically vary due to the presence of an object in the vicinity of the radiator or to other environmental changes. Hence, the setting of the impedance matching circuit 102 may be adjusted dynamically.

The circuit for determining a setting of an impedance matching circuit 102 comprises a performance tracking circuit 110 and an adaption circuit 120. The performance tracking circuit 110 is configured to calculate a quality criterion for a transmitted signal 124 using a transmit signal 122 and a feedback signal 126 which is determined downstream of the power amplifier 104. The transmitted signal 124 is generated using a pre-distortion model and the transmit signal 122.

According to the example of Fig. 1, the setting of the impedance matching circuit 102 is based on a quality criterion of the transmitted signal 124 which may, for example, be indicative of a signal quality of the transmitted signal 124. The quality criterion is determined or calculated using the transmit signal 122 intended to be transmitted using the amplifier 104 and a feedback signal 126 which is determined downstream the power amplifier 102. The transmitted signal 124 is generated using a pre-distortion model and the transmit signal 122, the pre-distortion model intended to alleviate the nonlinearities and memory effects of the power amplifier 104 by modifying the transmit signal prior to its. By using the transmit signal 122 as well as the feedback signal 126, a quality criterion which is indicative of a signal quality of the transmitted signal, e.g. quantifying its deviation from the desired transmit signal 122, may be calculated.

Determining the setting of the impedance matching circuit 102 based on the quality criterion bases the determination of the setting of the impedance matching circuit 102 on a quantity which is indicative of the quality of the generated and transmitted signal 124 which, in turn, should be compliant to predetermined signal quality requirements (KPIs). Using a quality criterion of the transmitted signal 124 to guide the impedance matching may result with transmit signals having high quality, e.g. being compliant with high signal quality requirements. As compared to approaches only relying on direct mismatch indicators such as, for example, a reflected signal power and phase, the signal quality of a transmitter using a circuit as illustrated in Fig. 1 may be increased as compared to the conventional approach. In some examples, the load, e.g. the radiator together with the impedance matching circuit 102 may even be slightly mismatched to the output of the power amplifier 104 at an ideal quality criterion, nonetheless resulting in a better signal quality as compared to an approach relying on direct mismatch indicators only. Relying on direct mismatch indicators only may provide better matching while disregarding the implications on the quality of the resultant transmit signal.

Fig. 2 illustrates a flowchart of an example of the method for determining a setting of an impedance matching circuit as already elaborated on in the preceding paragraphs. According to the method, a predistorted signal using a predistortion model and a transmit signal is generated in step 201. A quality criterion is calculated in step 202. The quality criterion is calculated for a transmitted predistorted signal 124 based on the transmit signal 122 and on the feedback signal 126. The feedback signal is determined downstream of the power amplifier 104. The transmitted predistorted signal 124 is generated using a pre-distortion model and a transmit signal 122. The setting of the impedance matching circuit is determined based on the quality criterion in step 204. Determining the setting of an impedance matching circuit based on a quality criterion for the transmitted signal 124 may result with the generation of a transmitted signal 124 with a high signal quality and/or having low impact on signals in neighboring part of the spectrum, for the reasons set forth in the preceding paragraphs. In some examples, the quality criterion is indicative of the signal quality of the transmitted signal to base the decision of the setting of the impedance matching circuit on a criterion relating to the signal quality of the generated and transmitted signal 124.

Fig. 2 further illustrates optional steps of a method for determining a setting of an impedance matching circuit which may be performed together with the use of a pre-distortion model. According to some embodiments, the method optionally further comprises calculating the pre-distortion model for the power amplifier in step 206 as well as transmitting a pre-distorted signal via the power amplifier, the pre-distorted signal being generated using the pre-distortion model and a transmit signal in step 208. Some examples calculate both the pre-distortion model as well as the quality criterion, enabling to interrelate the determination or calculation of the pre-distortion model serving to linearize the output of a power amplifier and the calculation of the quality criterion serving to determine the setting of the impedance matching circuit.

According to some examples, the quality criterion is optionally related to a further quality criterion used for calculating the pre-distortion model. In relating the criteria used to determine the pre-distortion model and the setting of the impedance matching circuit to one another, a transmitted signal may be generated which exhibits a very high signal quality, which may be the ultimate goal in adjusting the various characteristics of the components within a transmitter or of a transmit path within a transceiver.

According to some examples, the quality criterion used for the determination of the setting of the impedance matching circuit may optionally be identical to the further quality criterion used for the determination of the pre-distortion model which may result in an algorithm converging with a setting generating a transmitted signal with high signal quality indicators (KPI).

According to some examples, the quality criterion is optionally based on at least one of a signal-to-noise ratio, an error vector magnitude, a compliance with a spectral mask, a signal characteristic at an edge of a transmission band, and a characteristic of a reflected portion of the signal, depending on the signal characteristics to be considered or optimized, which may be the signal characteristics being important for the particular implementation.

According to some examples, determining the setting of the impedance matching circuit may optionally comprise comparing the quality criterion with a previously-determined quality criterion, the previously-determined quality criterion being associated with a direction of a previous change of the setting of the impedance matching circuit. In comparing the quality criterion with a previously-determined quality criterion, the setting of the impedance matching circuit may be iteratively determined and continuously adapted to possibly changing environmental conditions. Those examples may further comprise changing the setting of the impedance matching circuit in the same direction as the previous change if the quality criterion indicates a better quality of the transmitted signal than the previously-determined quality criterion and in another direction otherwise (e.g. in the opposite direction, if there is only two choices). In doing so, the setting of the impedance matching circuit may iteratively be enhanced in a blind way, i.e. if the effect of a change of the setting in a particular direction is not known a priori.

According to some examples, determining the setting of the impedance matching circuit optionally comprises calculating an estimate for the setting of the impedance matching circuit based on a characteristic of a reflected portion of the transmitted signal, e.g. based on the amplitude and on the phase of the reflected portion of the transmitted signal. Calculating the estimate of the setting in addition to the use of the quality criterion may increase the speed of the convergence of the method for the determination of the setting of the impedance matching circuit by directly calculating a promising starting point for the further determination (optimization) of the setting based on the quality criterion.

The setting of the impedance matching circuit which is being changed can be any setting, indicator, quantity or value resulting in a change of the impedance matching of a radiator coupled to an output of the power amplifier. For example, a change may either be an increase or a decrease of a value of at least one component of the impedance matching circuit. For some examples, increasing the number of components, e.g. of a switched capacitor or of a switched inductance network, may be used to change the setting. In further examples, a steering quantity used to vary a capacitance or an inductance of an adjustable capacitor or inductor may be used to change the setting, while further examples may change a steering signal, e.g. a pulse width modulated (PWM) signal in order to change the setting of an impedance matching circuit so as to result with an effective change of the matching of the impedance matching circuit.

In summary, in order to catch up with the ever-increasing demand for higher data rates and tackle the challenge for meeting the transmitter's KPIs by using an impedance matching circuit to mitigate output load mismatch, wireless transmitters (transmitters for wireless signals) are often designed and optimized to operate with 50 Ohm output load impedance. Typically, they are thought to reach good performance when their load exhibits a return loss (RL) no higher than -9dB. In reality, however, the transmitter load is often far from the ideal 50 Ohm. Further, low-cost antennas may exhibit a return loss of RL = -6dB already. Even if the power amplifier and the antenna have been adequately matched (e.g. to a RL < -10dB), unexpected environmental changes (e.g. obstructing objects, such as for example a human hand, in the vicinity of the antenna) may degrade the matching quality substantially, additionally decreasing the RL up to an additional amount of -3dB. According to the examples described herein, the transmitter performance of over output load mismatch ("load pull" test) may be significantly enhanced. This may be critical for wireless products, since a device must meet its KPIs over a wide range of output load impedances, typically RL > - 3dB. Severe mismatch might even cause damage to the power amplifier caused by the strong reflected signals or shorten battery lifetime significantly due to the excessive current consumption.

The examples summarized with respect to Figs. 1 and 2 use a quality criterion for the transmitted signal to determine a setting of an impedance matching circuit as opposed to previous approaches relying on direct impedance matching indications, which may have some drawbacks. For example, employing multiple antennas per radio frequency terminal and dynamically selecting the one least affected by nearby obstructing objects based on direct impedance matching indications (e.g. return power level) causes high costs, area consumption and has some complexity implications. Employing multiple fixed matching circuits and dynamically selecting one based on direct impedance matching indications likewise causes high cost, area consumption and has complexity implications. Further, only limited (coarse) control over the impedance matching can be achieved, since the resolution is limited by the number of available matching circuits. Also, using a LC bank to realize impedance matching using direct impedance matching indications provides only for a limited resolution of the impedance matching.

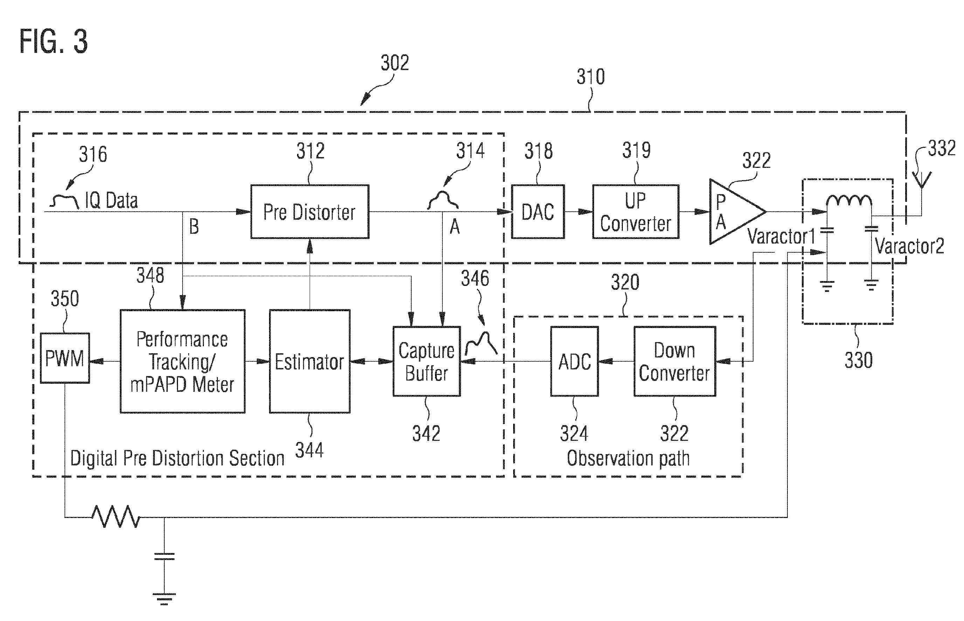

Fig. 3 illustrates an example of a transmitter for a wireless signal. For the ease of understanding, the digital part 302 of the transmitter is highlighted. The transmitter comprises a transmit signal path 310 as well as a feedback signal path 320. While the transmit signal path 310 comprises components necessary to generate and send a transmitted signal, the feedback signal path 320 is configured to provide a feedback signal having information on the transmitted signal. In order to provide the feedback signal, the feedback signal path 320 is coupled to the transmit signal path downstream of a power amplifier 322 within the transmit signal path 310.

An impedance matching circuit 330 is coupled to an output of the power amplifier 322 in order to match an impedance of an antenna radiator 332 and to reduce mismatch deteriorations. A pre-distortion circuit 312 within the transmit path 310 is configured to determine a pre-distorted signal 314 based on a transmit signal 316 and a pre-distortion model. The pre-distortion is performed in the digital domain and based on the transmit signal which is carrying the data to be transmitted by means of the transmitter. For the particular example illustrated in Fig. 3, the data is provided having an I/component and a Q/component, which is an implementation often used. However, other implementations to provide the transmit signal may alternatively be used as well. The pre-distortion circuit may be implemented in arbitrary ways. For example, it may be a filter with appropriately chosen filter coefficients. Generally speaking, pre-distortion is applied to the signal before the power amplifier and intended to modify the signal in anticipation of the power amplifiers imperfections such that, as a net effect, good linearity and phase preservation within the transmit path is achieved. Even in the event of changing matching conditions due to antecedent variations of the setting of the impedance matching circuit 330, subsequent determination of the pre-distortion model will provide for a high quality signal. According to some examples, interleaving the determination of the setting of the impedance matching circuit 330 and the determination of the pre- distortion model assures for a high quality signal also at changing environmental conditions. If, for example, the Saturation Power of the power amplifier changed to altered signal matching conditions, a new calculation of the pre-distortion model provides for a highly linear signal at the new conditions.

The pre-distorted signal is provided to a digital-to-analog converter 318 before being up-converted by an up-converter 319. The up-converted radio frequency signal is provided to the power amplifier 322 in order to provide the appropriate power required for the particular implementation. The feedback signal path is used to provide a feedback of the signal that is actually generated by means of the power amplifier 322 and radiated into the environment. In some examples, the feedback signal path is configured to receive both, forward and reverse signal portions. The forward signal portion corresponds to the transmit signal as generated by the Power Amplifier 322 and the reverse signal portion is the part of the signal reflected from the antenna radiator 332, e.g. due to mismatch. In a practical implementation, the forward signal portions and the reverse signal portions may be injected to the feedback signal path by means of two separate directional couplers, or by means of a single appropriate coupler, e.g. by a Rat Race Coupler.

The feedback signal path 320 comprises a down converter 322 and a subsequent analog-to-digital converter 324. A capture buffer 342 is coupled to the transmit path downstream the pre-distortion circuit 312 and to the analog-to-digital converter 324 as well as to the transmit path upstream of the pre-distortion circuit 312 in order to be able to buffer or temporarily store signal portions of the transmit signal 316 and the pre-distorted signal 314, respectively. A pre-distortion model calculating circuit 344 is configured to calculate the pre-distortion model using the pre-distorted signal 314 received from the capture buffer 342 and a feedback signal 346 received from the capture buffer 342 as well. The pre-distortion model may be calculated according to an arbitrary algorithm, for example using the indirect learning method to determine the coefficients $\alpha_{kq}$ of the "memory polynomial" (which is a simplified representation of the Volterra series). The memory polynomial models the inverse of the transfer function of the transmit path. In a particular implementation, the memory polynomial is constructed using a superposition of series, wherein each series represents the inverse of the transfer function at different time offsets:

$$\hat{z}(n) = F[y(n)] = \sum_{q=0}^{Q-1}\sum_{k=1}^{K} \alpha_{kq}\, y(n-q)\big| y(n-q)\big|^{k-1}.$$

Once determined, the coefficients $\alpha_{kq}$ are applied within the pre-distortion circuit 312 to the transmit signal 316 in order to derive the pre-distorted signal 314. The process of applying these coefficients to the transmitted signal is also known as digital pre-distortion. After the pre-distortion circuit 312, the signal to be transmitted by the transmitter should be well linearized, i.e. having good phase preservation characteristics and linearity over the full dynamic range of the power amplifier 322.

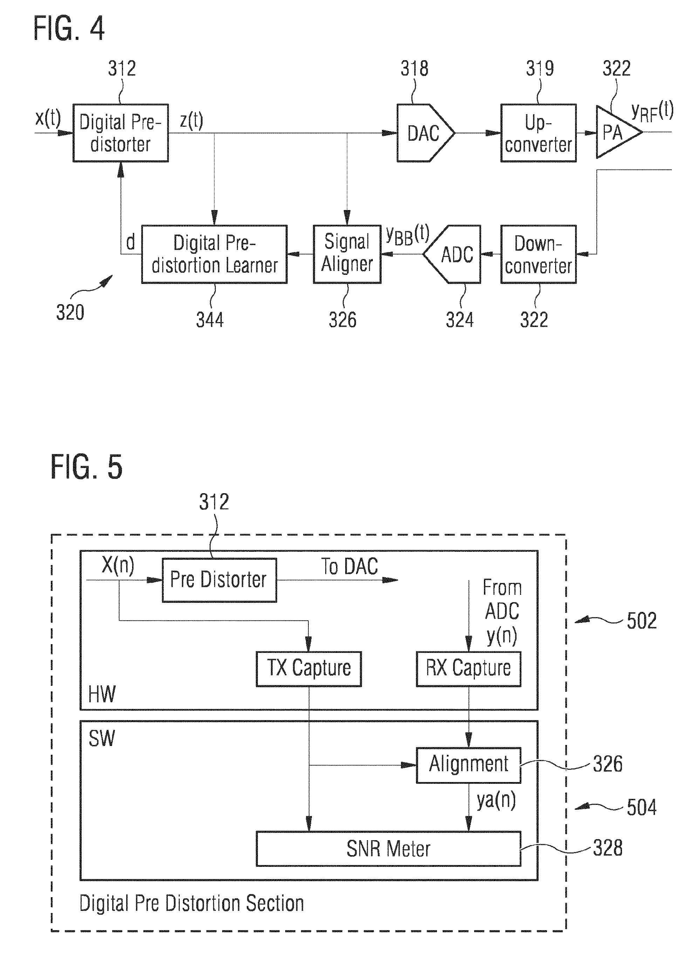

Figs. 4 and 5 illustrate the digital pre-distortion section for the determination of the pre-distortion model at different levels of detail. Identical components already illustrated in Fig. 3 are given the same reference numbers. For the determination of the coefficients defined in the previous equation, the pre-distortion model calculating circuit 344 receives the samples $y_{BB}(t)$ via the feedback signal path 320 as well as the samples z(t) of the pre-distorted signal in order to determine the coefficients $\alpha_{kq}$ over the pre-distortion model. Once the coefficients have been determined, they are used to transform the transmit signal x(t) into the pre-distorted signal z(t). Figs. 4 and 5 further illustrate a signal aligner 322 which ensures that signal delays are compensated and that the signal samples corresponding to each other are used for the determination of the pre-distortion model. Fig. 5 illustrates a possible implementational detail, in particular, how the different method steps for the determination of the pre-distortion model may be distributed between a hardware portion 502 and a software portion 504. However, alternate implementational examples may use a different distribution of the individual method steps between the hardware and software portions 502 and 504. As a further implementational detail, Fig. 5 illustrates a signal-to-noise (SNR) meter used to determine a signal-to-noise ratio of the transmitted signal, based on the transmit signal and the transmitted signal.

The impedance matching circuit 330 of the transmitter of fig. 3 may be an adaptive or tunable matching circuit (using, e.g. varactors, on-package inductors, transmission lines, etc.). The performance tracking circuit 348 of the transmitter is configured to calculate the quality criterion for the transmitted signal using the transmit signal 316 and the feedback signal 346. The quality criterion is indicative of a signal quality of the transmitted signal. For example, the quality criterion may correspond to the further quality criterion used within the pre-distortion model calculating circuit 344 to determine the pre-distortion model. Instead of using direct impedance matching indicators, an output characteristic of the pre-distortion model or of a predistortion algorithm used to determine the pre-distortion model is used to calculate the setting of the impedance matching circuit 330.

A pulse-width modulation circuit 350 serves to change the setting of the impedance matching circuit 330 depending on the determined quality criterion. In the particular implementation illustrated in Fig. 3, two varactors are used within an impedance matching circuit 330 and the pulse-width modulator 350 is used to generate the voltage controlling the varactor's states. Further examples may use arbitrary other means to convert a digital quantity as determined within the performance tracking circuit 348 to an analog signal, as for example a Digital to Analog Converter.

A transmitter as illustrated in Fig. 3 may be used to implement an example of a method for determining a setting of an impedance matching circuit. To achieve this, an adaptive (tunable) matching circuit (using, e.g. varactors, on-package inductors, transmission lines or the like) may be employed. A pre-distortion model is determined (for example according to the previously-introduced memory power amplifier pre-distortion, MPAPD, algorithm) using a directional coupler downstream of the power amplifier, the directional coupler comprising a forward coupler port (FW) as well as a reverse coupler port (REF). For the determination of the pre-distortion model (within the MPAPD observation path), a wideband loopback receiver may be used. Depending on the implementation details, the loopback receiver may exhibit up to three times the bandwidth of the transmitted radio frequency signal, for example, if a criterion to be considered is the power of spectral density at the edges of the transmission band. According to the examples described herein, the matching circuit (impedance matching circuit 320) is tuned based on an output characteristic of the pre-distortion algorithm (MPAPD algorithm) instead of using direct impedance matching indications. The pre-distortion algorithm may then adapt its correction polynomial coefficients given the new state of the matching circuit, thus achieving the best possible system KPI for the present environmental conditions.

Steps for determining the pre-distortion model and for determining the setting of the impedance matching circuit may be interleaved. For example, the determination of the pre-distortion model and the determination of the setting of the impedance matching circuit may be alternatingly performed, based on subsequently transmitted data frames or transmit signal portions.

As compared to solutions determining the setting of the impedance matching circuit only based on direct impedance matching indications, the determination of the setting of the impedance matching circuit (matching optimization) is based on an MPAPD output criterion, such as error vector magnitude (EVM) and spectral mask. The achievable advantages may be substantial, since the bottom line transmit KPIs to be optimized (EVM, mask, ...) would not necessarily present their optimum at the point where the direct impedance matching indications present an optimum. Generally, it would commonly not be the same point. Relying only on direct impedance matching indications may even lead to degraded transmit KPIs compared to a matching optimization based on MPAPD criteria, hence being based on the specific bottom line figures of merit being targeted. Re-using a possibly existing wideband loopback receiver within the feedback path together with the MPAPD algorithm analysis provides much more information on the transmitter's performance for the determination of the setting of the impedance matching circuit than conventional approaches rely on. Further, the examples described herein are fully adaptive, given that a truly tunable matching circuit is used. Further, in binding the tunable matching circuit (impedance matching circuit 320) control to work in synergy with the transmitter's or power amplifier's linearization algorithm (MPAPD) provides that the combined matching and linearization effects would bring the transmitter to its best possible KPIs at any output load mismatch. This may provide an optimum range and/or data rate achievable by means of a transmitter using an example described herein. Further, since the pre-distortion logic (MPAPD block) is the master of the operation, contention can be avoided.

As illustrated in Fig. 3, a system capable of performing a method for determining a setting of an impedance matching circuit may be characterized as comprising a matching circuit, an observation path, a capture buffer, an estimator, a pre- distorter, a performance tracking circuit (EVM & PSD meter) and PWM blocks. The varactors are used to change the mismatch in the adaptive matching circuit according to the performance tracker output. Note that for simplicity and brevity, a varactor based matching circuit is shown, while further examples could employ a matching circuit of any configuration (e.g. T, Pi) with any type of tunable/selectable devices, such as on-package inductors, transmission lines and so on.

The Performance tracker is based on MPAPD algorithm output characteristic(s), such as for example EVM, PSD (Power Spectral Density) over 3xBW - Mask and Band Edge Emissions, Correction Polynomial Coefficients, FW and REV coupler ports analysis. The PWM (Pulse Width Modulation) block, generates the voltage control for the varactors states. The adaptive mismatch circuit can be based on the suggested combination of varactors and inductors, bank of transmission lines or any other implementation.

The transmitter of fig, 3 may be used to perform the following example of a method for determining a setting of an impedance matching circuit.

In a first stage of the method, a frame is transmitted, and captured through the observation path in the capture buffer. The capture data in this stage is taken from point A before the predistortion circuit 312 and from the ADC output. The transmitted frame is used to calculate the linearization coefficients. The frame can be one of two options, a dummy frame (e.g. WiFi RTS) - generated by the MAC layer for the sheer purpose of this calibration or an operational frame. An operational frame may require an additional mechanism that would detect whether the current TX frame is adequate for the estimation process. For example, this detection mechanism would determine if the frame is transmitted in the required power level, and has sufficiently high Peak to Average Power Ratio (PAPR).

In a second stage, the pre-distorter coefficients are calculated in the estimator, and loaded to the pre-distorter block. In this stage the non-linearity issues and channel should be fixed according to the provided mathematical model.

In a third stage, a second frame is transmitted, and captured through the observation path in the capture buffer. The data in this stage is taken from point B after the predistortion circuit 312 and ADC output, and loaded to the performance tracker. The recorded data is comprised of two readings: data recorded from the forward coupler port used to calculate the SNR and PSD of the linearized transmitter, and data recorded from the reverse coupler port, which indicates the amplitude and phase of the reflected signal due to mismatch, as well as additional informative parameters used for the analysis, such as frequency amplitude and phase response, nonlinearity and any type of information which can be extracted from the FW & REV signals analysis.

In a fourth stage, the performance tracker calculates the SNR between the two vectors and provides a number which indicates the quality of the transmitter. Another metric is the calculated PSD of the signal which yields the margin to the MASK and BE (band edge) emissions of the signal.

In a fifth stage, the PWM block increases the voltage to first varactor in one possible implementation. The PWM can change the voltage in a blind way when the corrected direction is not known at the first step, or by using the information from the reverse coupler port (e.g. frequency phase response) to determine the change direction.

In a sixth stage, stages 1-4 are repeated and produce new EVM and MASK metrics. If the metrics from stage 6 are worse than the former metrics, the direction of the change of the settings of impedance matching circuit was wrong and the PWM will reduce the voltage related to the first varactor. If the metric is better, the PWM will continue increase the voltage. The second varactor will be optimized once the first one reaches its optimum, as indicated by the metrics (EVM and MASK) ceasing to improve.

Note that a variety of optimization and/or search algorithms can be applied to find the optimal capacitance value. Furthermore, $\alpha$-priori information (e.g. from characterization and/or production) can be leveraged to assist in the convergence of the MPAPD & Matching optimization.

The subsequent paragraphs describe the previously introduced stages of the method in more detail.

Stages 1 and 2: After a synthetic frame is transmitted and captured in the recording buffers, the mathematical model coefficients need to be calculated. A method used to solve this problem uses the indirect learning method which determines the coefficients which convert the baseband down-converted PA output signal $y_{BB}(t)$ to the baseband signal transmitted through the transmit chain $z(t)$. The coefficients are generally the coefficients of the memory polynomial, which is a simplified representation of the Volterra Series. The memory polynomial models the inverse of the transfer function of the transmission path, by taking into account memory aspects of this function. The memory polynomial is constructed using the superposition of series, where each series represents the inverse of the transfer function at different time offsets.

$$\hat{z}(n) = F[y(n)] = \sum_{q=0}^{Q-1} \sum_{k=1}^{K} \alpha_{kq}\, y(n-q) \left| y(n-q) \right|^{k-1}.$$

Once determined, these coefficients are applied on the transmit signal. This process of applying these coefficients on the transmitted signal is known as digital pre-distortion. At the end of theses stages the transmitter should be well linearized.

Stages 3 and 4: On these stages the SNR meter will provide a figure of merit which indicates the quality of the transmitter. In order to do that a new frame is transmitted and captured in the buffers in order to calculate the required metrics like SNR and PSD as well as the reflected signal (coupler reverse port) information (e.g. frequency amplitude and phase response). After the previous step is completed (Pre-Distortion Calibration), the transmitter should be well calibrated. The main stages in the quality/SNR meter implementation are: Transmitting a frame of TX data should be taken before pre-distorter block while receive data should be taken from receive path (ADC output). Both frames can be used through alignment block in order to eliminate time, phase and gain offset. SNR block calculation will provide the quality of the transmitted signal and PSD block will calculate the MASK and BE margins. A further circuit block (SNR meter) will measure the amplitude and phase of the reflected signal, fig. 5 depicting a possible SNR meter configuration.

Stages 5 and 7: The PWM increases the voltage related to the first varactor (VC1) and stages 1 to 4 are repeated. At the end of stage 4 a new figure of merit is produced. If the SNR or the PSD quality decreases compared with the previous measurements, then the system recognizes that the direction of the control was wrong, and the PWM will decrease the voltage related to VC1, the first of two varactors of the particular implementation of fig. 3. If the measured quality increases, the system recognizes that the direction of the control was correct. While VC1 voltage is changing the second varactor VC2 is kept constant. Once VC1 voltage will provide the optimal performance, VC2 would start the same procedure while VC1 would be kept constant.

In using an example described herein, system performance (rate, range...) is directly determined by critical metrics which are an output of the MPAPD algorithm, e.g. EVM and MASK. Conventional procedures rely on mismatch related indications which are not the correct and performance-determining criteria. The flexibility of using varactors with any range of capacitance are applicable. The method searches for the best EVM/SNR and PSD in the available capacitance range of the varactors, which is quite simple. The transmitter calibration and mismatch circuit tuning are bound together which guarantees optimal applicable transmitter performance. In other words, some of the examples described herein combine the mismatch circuit state and the transmitter linearization state (by learning the required inverse coefficients per new mismatch impedance state), hereby achieving that the transmitter will provide a very good performance per calibration state, resulting in close to optimal rate/range.

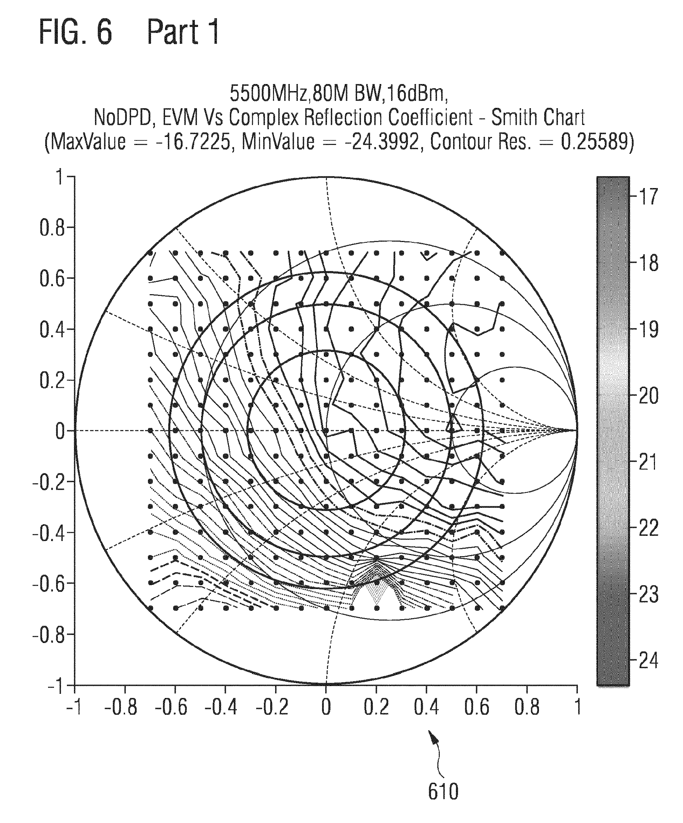

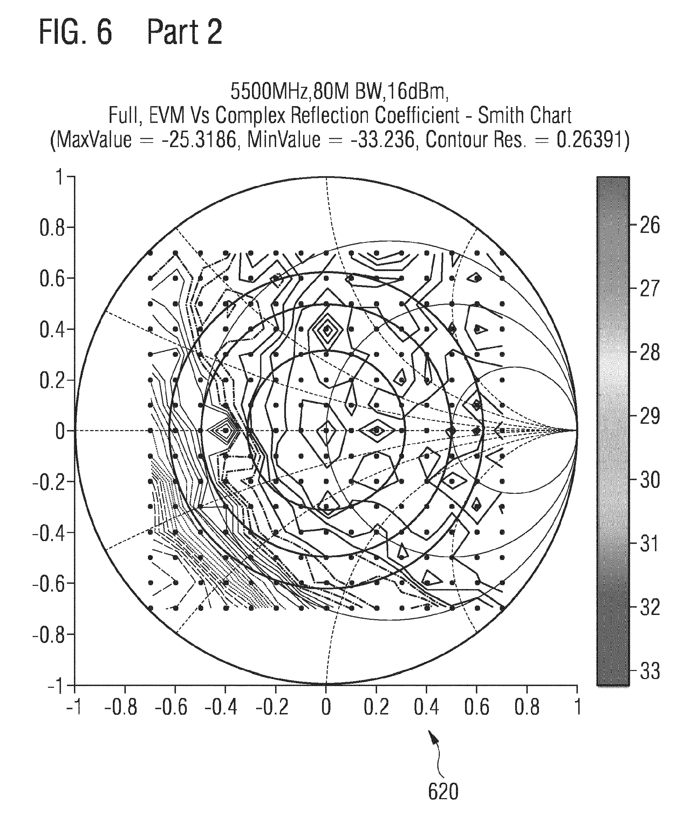

Fig. 6 illustrates the extent of the improvement one may achieve when using an example as described herein to determine the setting of the impedance matching circuit within a transmitter architecture. As a quality criterion, the error vector magnitude was determined for three setups having a return loss of -10dB, -6dB, and -4dB. The graphs in Fig. 6 illustrate the error vector magnitude as a function of the complex Reflection Coefficient, while the impedance matching was modified by a load pull device. The left graph 610 illustrates the measurement of the performance (EVM) without applying a method for determining a setting of an impedance matching circuit and without determining the pre-distortion model.

The right graph 620, instead, illustrates an example of a method for determining a setting of an impedance matching circuit, additionally using a pre-distortion model which is determined as elaborated on in the previous paragraphs. The left graph 610 illustrates that without using an example as described herein, changing the impedance matching causes the EVM to vary from -24dB to -17dB with a total variance of 7dB. To the contrary, as illustrated by the right graph 620, the EVM is improved to -33.5 dB (-29.5 worst-case) with a total variance of only 4 dB when both, the pre-distortion model and the determination of the setting of the impedance matching circuit was applied as described herein. The strong increase in quality is due to both the linearization and the correction of antenna mismatch. One may additionally note that the transmitter under test providing in the results of Fig. 6 exhibits considerable integrated phase noise (among various other impairments) which masks the net effect of the combined pre-distortion and impedance matching contributions to the improvement of the EVM, which, when estimated in isolation, would be much greater than the overall error vector magnitude improvement derivable from comparing the left and right graph of Fig. 6. One may further gather from the illustration of the right graph of Fig. 6 that a complex adaptive mismatch network might not be necessary in order to arrive at a desired (e.g. 50 Ohm) impedance. From the right graph one may derive that, after calibration, one can find for every VSWR-equal circle a decent arc providing the best EVM. In other words, when using an example as described herein, it may be enough to only change the phase while maintaining the same VSWR (real part of the impedance of the impedance matching circuit) in order to arrive at the best possible EVM performance (which is not necessarily achieved at 50 Ohm). In order to vary the phase, one could, for example, simply employ a bank of transmission lines which is very simple to implement and cost effective. In other words, the examples described herein may also serve to save on complexity of the impedance matching network.

Examples as described herein may provide for a high quality transmit signal even if an additional mismatch is deliberately introduced into the system. This may, for example, be achieved by obstructing the antenna with various (e.g. metallic) objects and/or using a load pull test setup. The wireless transmitter or device may then be tested with high transmit signal bandwidths, high transmit signal power and high modulation coding schemes (MCS) and the device may automatically adapt to the spatial/load mismatch conditions when examples as described herein are used. Another way to deliberately introduce mismatch would be to use a focused ion beam. If the feedback path for the determination of the pre-distortion model would be cut, and antenna mismatch was deliberately introduced, one may observe that the transmitter is unable to adapt to the new mismatch conditions, if it implements an example of a method for determining a setting of an impedance matching circuit as described herein.

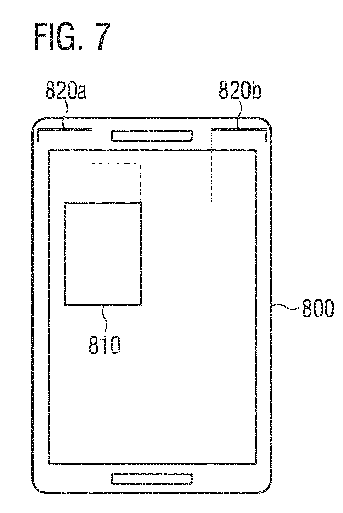

Fig. 7 schematically illustrates an example of a mobile telecommunications device 800 comprising a transmitter 810, as herein illustrated and according to one of the examples described herein. According to the particular implementation, the transmitter 810 within the mobile telecommunications device 800 may be coupled to one or to both of the antenna radiators 820a and 820b of the mobile telecommunications device 800, while further examples may also use an arbitrary higher number of radiators.

Example 1 is a method for impedance matching, comprising calculating a predistortion model for the power amplifier; generating a predistorted signal using the predistortion model and a transmit signal; transmitting the predistorted signal via a power amplifier; calculating a quality criterion for the transmitted predistorted signal using the transmit signal and a feedback signal; and determining the setting of an impedance matching circuit based on the quality criterion.

In example 2, the method of example 1 further comprises determining the feedback signal downstream the power amplifier.

In example 3, in the method of example 1 or 2, determining the setting of the impedance matching circuit comprises comparing the quality criterion with a previously determined quality criterion, the previously determined quality criterion being associated to a direction of a previous change of the setting of the impedance matching circuit; and changing the setting of the impedance matching circuit in the same direction as the previous change if the quality criterion indicates a better quality of the transmitted predistorted signal than the previously determined quality criterion, and in a different direction if the quality criterion indicates same or worse quality.

In example 4, in the method of example 3, the change is an increase or a decrease of a value of at least one component of the impedance matching circuit.

In example 5, the method of any of examples 1 to 4 further comprises calculating an estimate for the setting of the impedance matching circuit based on a characteristic of a reflected portion of the transmitted predistorted signal.

In example 6, in the method of any of the preceding examples, the quality criterion is related to at least one further quality criterion used for calculating the predistortion model.

In example 7, in the method of example 6, the quality criterion is identical to the further quality criterion.

In example 8, in the method of any of the preceding examples, the quality criterion is indicative of a signal quality of the transmitted predistorted signal.

In example 9, in the method of any of the preceding examples, the quality criterion is based on at least one of a Signal to Noise Ratio, an Error Vector Magnitude, a compliance with a spectral mask, a signal characteristic at an edge of a transmission band and a characteristic of a reflected signal.

Example 10 is a method for impedance matching, comprising generating a predistorted signal using a predistortion model and a transmit signal; calculating a quality criterion for a transmitted predistorted signal based on the transmit signal and a feedback signal; and determining the setting of an impedance matching circuit based on the quality criterion.

In example 11, the method of example 10 further comprises determining the feedback signal downstream the power amplifier.

In example 12, in the method of example 10 or 11, the quality criterion is indicative of a signal quality of the transmitted signal.

Example 13 is a circuit for determining a setting of an impedance matching circuit, comprising: a performance tracking circuit configured to calculate a quality criterion for a transmitted predistorted signal using a transmit signal and a feedback signal, the transmitted predistorted signal being generated using a predistortion model and the transmit signal; and an adaption circuit configured to determine the setting of the impedance matching circuit based on the quality criterion.

In example 14, in the circuit of example 13, the adaption circuit is configured to compare the quality criterion with a previously determined quality criterion, the previously determined quality criterion being associated to a direction of a previous change of the setting of the impedance matching circuit; and to change the setting of the impedance matching circuit in the same direction as the previous change if the quality criterion indicates a better quality of the transmitted signal than the previously determined quality criterion and in another direction if the quality criterion indicates same or worse quality.

Example 15 is a transmitter for a wireless signal, comprising a predistortion circuit configured to determine a pre-distorted signal using a transmit signal and a predistortion model; a power amplifier coupled to an output of the predistortion circuit; an impedance matching circuit coupled to an output of the power amplifier; a feedback signal path configured to provide a feedback signal, the feedback signal path being coupled to a transmit signal path downstream the power amplifier; a performance tracking circuit configured to calculate a quality criterion for a transmitted predistorted signal using the transmit signal and the feedback signal; and an adaption circuit configured to determine a setting of the impedance matching circuit based on the quality criterion.

In example 16, the transmitter of example 15 further comprises a predistortion model calculating circuit configured to calculate the predistortion model using the predistorted signal and the feedback signal and at least one further quality criterion.

In example 17, in the transmitter of example 15 or 16, the quality criterion is related to the further quality criterion.

In example 18, in the transmitter of example 17, the quality criterion is identical to the further quality criterion.

In example 19, in the transmitter of any of examples 15 to 18, the quality criterion is based on at least one of a Signal to Noise Ratio, an Error Vector Magnitude, a compliance with a spectral mask, a signal characteristic at an edge of a transmission band and a characteristic of a reflected signal.

In example 20, in the transmitter of any of examples 15 to 19, the bandwidth of the feedback signal path is at least twice a nominal bandwidth of the transmitted signal.

In example 21, in the transmitter of any of examples 15 to 20, the feedback signal path comprises a downmixer and an Analog to Digital Converter.

In example 22, the transmitter of any of examples 15 to 11 further comprises a Digital to Analog converter coupled between the predistortion circuit and the power amplifier.

Example 23 is a mobile telecommunications device, comprising a transmitter according to any of examples 15 to 22.

In example 24, the mobile telecommunications device of example 23 further comprises a radiator configured to couple to the impedance matching circuit.

Example 25 is means for impedance matching, comprising generating a predistorted signal using a predistortion model and a transmit signal; means for calculating a quality criterion for a transmitted predistorted signal using the transmit signal and a feedback signal; and means for determining a setting of the impedance matching circuit based on the quality criterion.

In example 26, the means of example 25 further comprise means for comparing the quality criterion with a previously determined quality criterion, the previously determined quality criterion being associated to a direction of a previous change of the setting of the impedance matching circuit; and means for changing the setting of the impedance matching circuit in the same direction as the previous change if the quality criterion indicates a better quality of the transmitted predistorted signal than the previously determined quality criterion, and in a different direction if the quality criterion indicates same or worse quality.

In example 27, the means of example 25 or 26 further comprise means for calculating a pre-distortion model for the power amplifier.

Example 28 is a computer program having a program code for performing, when executed by a programmable processor, a method according to example 10 to 12.

Example 29 is a non-transitory computer readable storage medium comprising a computer program having a program code for performing, when executed by a programmable processor, a method according to example 10 to 12.

While the examples have previously been described mainly for WLAN applications, further examples of wireless communication circuits may be configured to operate according to one of the 3GPP-standardized mobile communication networks or systems. The mobile or wireless communication system may correspond to, for example, a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc..

The aspects and features mentioned and described together with one or more of the previously detailed examples and figures, may as well be combined with one or more of the other examples in order to replace a like feature of the other example or in order to additionally introduce the feature to the other example.

Examples may further be a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. It will thus be appreciated that those skilled in the art will be able to devise various arrangements that, although not explicitly described or shown herein, embody the principles of the disclosure and are included within its spirit and scope. Furthermore, all examples recited herein are principally intended expressly to be only for pedagogical purposes to aid the reader in understanding the principles of the disclosure and the concepts contributed by the inventor(s) to furthering the art, and are to be construed as being without limitation to such specifically recited examples and conditions. Moreover, all statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a sensor signal", "means for generating a transmit signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software, but may include digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

Furthermore, the following claims are hereby incorporated into the detailed description, where each claim may stand on its own as a separate example. While each claim may stand on its own as a separate example, it is to be noted that - although a dependent claim may refer in the claims to a specific combination with one or more other claims - other example examples may also include a combination of the dependent claim with the subject matter of each other dependent or independent claim. Such combinations are explicitly proposed herein unless it is stated that a specific combination is not intended. Furthermore, it is intended to include also features of a claim to any other independent claim even if this claim is not directly made dependent to the independent claim.

**Claims**

1.  A method for impedance matching, comprising:

    calculating a predistortion model for a power amplifier;
    generating a predistorted signal using the predistortion model and a transmit signal;
    transmitting the predistorted signal via a power amplifier;
    calculating a quality criterion for the transmitted predistorted signal using the transmit signal and a feedback signal; and
    determining the setting of an impedance matching circuit based on the quality criterion.

2.  The method of claim 1, further comprising:

    determining the feedback signal downstream the power amplifier.

3.  The method of claim 1 or 2, wherein determining the setting of the impedance matching circuit comprises:

    comparing the quality criterion with a previously determined quality criterion, the previously determined quality criterion being associated to a direction of a previous change of the setting of the impedance matching circuit; and
    changing the setting of the impedance matching circuit in the same direction as the previous change if the quality criterion indicates a better quality of the transmitted predistorted signal than the previously determined quality criterion, and in a different direction if the quality criterion indicates same or worse quality.

4.  The method of claim 3, wherein the change is an increase or a decrease of a value of at least one component of the impedance matching circuit.

5.  The method of any of claims 1 to 4, further comprising:

    calculating an estimate for the setting of the impedance matching circuit based on a characteristic of a reflected portion of the transmitted predistorted signal.

6.  The method of any of the preceding claims, wherein the quality criterion is related to at least one further quality criterion used for calculating the predistortion model.

7.  The method of claim 6, wherein the quality criterion is identical to the further quality criterion.

8.  The method of any of the preceding claims, wherein the quality criterion is indicative of a signal quality of the transmitted predistorted signal.

9.  The method of any of the preceding claims, wherein the quality criterion is based on at least one of a Signal to Noise Ratio, an Error Vector Magnitude, a compliance with a spectral mask, a signal characteristic at an edge of a transmission band and a characteristic of a reflected signal.

10. A method for impedance matching, comprising:

    generating a predistorted signal using a predistortion model and a transmit signal;
    calculating a quality criterion for a transmitted predistorted signal based on the transmit signal and a feedback signal; and

determining the setting of an impedance matching circuit based on the quality criterion.

11. The method of claim 10, wherein the quality criterion is indicative of a signal quality of the transmitted signal.

12. A transmitter for a wireless signal, comprising:

a predistortion circuit configured to determine a predistorted signal using a transmit signal and a predistortion model;
a power amplifier coupled to an output of the predistortion circuit;
an impedance matching circuit coupled to an output of the power amplifier;
a feedback signal path configured to provide a feedback signal, the feedback signal path being coupled to a transmit signal path downstream the power amplifier;
a performance tracking circuit configured to calculate a quality criterion for a transmitted predistorted signal using the transmit signal and the feedback signal; and
an adaption circuit configured to determine a setting of the impedance matching circuit based on the quality criterion.

13. The transmitter of claim 12, further comprising:

a predistortion model calculating circuit configured to calculate the predistortion model using the predistorted signal and the feedback signal and at least one further quality criterion.

14. The transmitter of claim 12 or 13, wherein the quality criterion is related to the further quality criterion.

15. A computer program having a program code for performing, when executed by a programmable processor, a method according to claim 10 or 11.

# FIG. 1

122                               124

104              100

126

110                 120

# FIG. 2

| | |
|---|---|
| general predistorted signal | ~201 |
| calculate quality criterion | ~202 |
| determine the setting of the impedance matching circuit | ~204 |
| calculate predistortion model | ~206 |
| transmit predistorted signal | ~208 |

FIG. 3

EP 3 300 257 A1

# FIG. 4

# FIG. 5

## FIG. 6  Part 1

5500MHz,80M BW,16dBm,
NoDPD, EVM Vs Complex Reflection Coefficient - Smith Chart
(MaxValue = -16.7225, MinValue = -24.3992, Contour Res. = 0.25589)

610

# FIG. 6   Part 2

5500MHz,80M BW,16dBm,
Full, EVM Vs Complex Reflection Coefficient - Smith Chart
(MaxValue = -25.3186, MinValue = -33.236, Contour Res. = 0.26391)

620

FIG. 7

Europäisches
Patentamt

European
Patent Office

Office européen
des brevets

# EUROPEAN SEARCH REPORT

Application Number

EP 16 18 9910

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2005/027342 A1 (NORTEL NETWORKS LTD [CA]) 24 March 2005 (2005-03-24) * page 23, line 24 - page 25, line 16; figure 10 * | 1-15 | INV. H04B1/04 |
| A | US 2012/051409 A1 (BROBSTON MICHAEL L [US] ET AL) 1 March 2012 (2012-03-01) * paragraphs [0052], [0058]; figures 3,4 * | 1-15 | |
| A | US 2012/214421 A1 (HOIRUP CARSTEN [US] ET AL) 23 August 2012 (2012-08-23) * paragraph [0031] - paragraph [0033]; figure 7 * | 1-15 | |
| A | US 2013/027129 A1 (LANGER ANDREAS [DE]) 31 January 2013 (2013-01-31) * paragraph [0049] - paragraph [0053]; figure 5 * | 1-15 | |
| | | | TECHNICAL FIELDS SEARCHED (IPC) |
| | | | H04B H03F |

| The present search report has been drawn up for all claims | | |
|---|---|---|
| Place of search | Date of completion of the search | Examiner |
| Munich | 27 March 2017 | Lindberg, Per |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 18 9910

This annex lists the patent family members relating to the patent documents cited in the above-mentioned European search report.
The members are as contained in the European Patent Office EDP file on
The European Patent Office is in no way liable for these particulars which are merely given for the purpose of information.

27-03-2017

| Patent document cited in search report | | Publication date | Patent family member(s) | | Publication date |
|---|---|---|---|---|---|
| WO 2005027342 | A1 | 24-03-2005 | NONE | | |
| US 2012051409 | A1 | 01-03-2012 | EP | 2612445 A2 | 10-07-2013 |
| | | | US | 2012051409 A1 | 01-03-2012 |
| | | | WO | 2012030157 A2 | 08-03-2012 |
| US 2012214421 | A1 | 23-08-2012 | CA | 2826573 A1 | 23-08-2012 |
| | | | EP | 2676375 A1 | 25-12-2013 |
| | | | EP | 3026822 A1 | 01-06-2016 |
| | | | US | 2012214421 A1 | 23-08-2012 |
| | | | US | 2014187180 A1 | 03-07-2014 |
| | | | US | 2016080026 A1 | 17-03-2016 |
| | | | WO | 2012112831 A1 | 23-08-2012 |
| US 2013027129 | A1 | 31-01-2013 | CN | 102904532 A | 30-01-2013 |
| | | | DE | 102012213096 A1 | 31-01-2013 |
| | | | US | 2013027129 A1 | 31-01-2013 |
| | | | US | 2014248844 A1 | 04-09-2014 |
| | | | US | 2015333711 A1 | 19-11-2015 |

EPO FORM P0459

For more details about this annex : see Official Journal of the European Patent Office, No. 12/82